(19) **Europäisches Patentamt / European Patent Office / Office européen des brevets**

(11) **EP 3 576 362 B1**

(12) # EUROPEAN PATENT SPECIFICATION

(45) Date of publication and mention
of the grant of the patent:
**21.01.2026 Bulletin 2026/04**

(21) Application number: **18772439.8**

(22) Date of filing: **21.03.2018**

(51) International Patent Classification (IPC):
**H04B 7/0452** (2017.01)    **H04B 7/0456** (2017.01)
**H04B 7/06** (2006.01)

(52) Cooperative Patent Classification (CPC):
**H04B 7/0452; H04B 7/0456; H04B 7/0689;
H04B 7/0697**

(86) International application number:
**PCT/CN2018/079798**

(87) International publication number:
**WO 2018/171622 (27.09.2018 Gazette 2018/39)**

(54) **DATA TRANSMISSION METHOD AND DEVICE, AND DATA RECEIVING METHOD AND DEVICE**

DATENÜBERTRAGUNGSVERFAHREN UND -VORRICHTUNG SOWIE
DATENEMPFANGSVERFAHREN UND -VORRICHTUNG

PROCÉDÉ ET DISPOSITIF DE TRANSMISSION DE DONNÉES, ET PROCÉDÉ ET DISPOSITIF DE
RÉCEPTION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 CN 201710184597**

(43) Date of publication of application:
**04.12.2019 Bulletin 2019/49**

(73) Proprietor: **Huawei Technologies Co., Ltd.
Longgang District
Shenzhen, Guangdong 518129 (CN)**

(72) Inventors:
• **WU, Ye
Shenzhen
Guangdong 518129 (CN)**
• **BI, Xiaoyan
Shenzhen
Guangdong 518129 (CN)**

(74) Representative: **Thun, Clemens
Mitscherlich PartmbB
Patent- und Rechtsanwälte
Karlstraße 7
80333 München (DE)**

(56) References cited:
**EP-A1- 1 973 238        EP-A1- 3 242 460
WO-A1-2009/091307    WO-A1-2016/044076
WO-A1-2016/106728    CN-A- 101 272 169
CN-A- 102 696 182**

• **SAMSUNG: "Precoding for MIMO spatial
multiplexing and transmit diversity", 3GPP
DRAFT; R1-062529, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Seoul,
Korea; 20061004, 4 October 2006 (2006-10-04),
XP050103051**
• **PHILIPS: "Reuse of Release 8 Codebook Design
for Release 10 DL MIMO UE feedback", 3GPP
TSG RAN WG 1 MEETING #60, 26 February 2010
(2010-02-26), XP050418790**

1      EP 3 576 362 B1      2

## Description

## TECHNICAL FIELD

This application relates to the communications field, and more specifically, to a data sending method and apparatus, and a data receiving method and apparatus.

## BACKGROUND

In a long term evolution (Long Term Evolution, LTE) system and an LTE-advanced (LTE-Advanced, LTE-A) system, multi-antenna technologies are increasingly used in data transmission. A multiple-input multiple-output (multiple-user multiple-input multiple-output, MIMO) technology means that a plurality of transmit antennas and receive antennas are used on a transmit end device and a receive end device, so that signals are transferred and received by using the plurality of antennas of the transmit end device and the receive end device.

Currently, a multiple-user multiple-input multiple-output (multiple-user multiple-input multiple-output, MU-MIMO) technology can support data transmission that is performed between a transmit end device and different receive end devices by using a same time frequency resource and a same transmission scheme. This dramatically limits a spatial degree of freedom of the MU-MIMO technology.

EP 1 973 238 A1 refers to a method for determining the appropriate combination of at least two MIMO transmission techniques for a radio link in between a transmitter and a receiver. The MIMO transmission techniques use at least two antennas with at least two polarisations. An appropriate combination is the combination of beamforming and at least one of polarisation time coding, closed loop coherent combination of polarisation beams and polarisation multiplexing. The appropriate combination is chosen dependent on at least one of radio conditions of the radio link and relative velocity in between the transmitter and the receiver. The invention further relates to a method for receiving a transmission of a radio link in between a transmitter and a receiver.

WO 2009/091307 A1 refers to data being transmitted over multiple input multiple output (MIMO) channels. Plural bit streams are modulated into multiple data symbol vectors. Each vector has a transmission rank with one vector for each MIMO channel. Transmission rank is the number of elements in a data symbol vector corresponding to the number of data streams being transmitted in parallel over each MIMO channel. The multiple data symbol vectors are preceded into multiple precoded symbol vectors using a plurality of precoder cycling sets, one set for each transmission rank including multiple different precoders. The precoders in each precoder cycling set are well-separated with respect to a plurality of distance measures. The precoding includes precoding each data symbol vector of a transmission rank with a precoder belonging to the precoder cycling set of that transmission rank. The precoded symbol vectors are then transmitted over the MIMO channels.

## SUMMARY

This application provides a data receiving apparatus, to improve a spatial degree of freedom. This problem is solved by the subject matter of independent claim 1.

## BRIEF DESCRIPTION OF DRAWINGS

FIG. 1 is a schematic diagram of a scenario applicable to a data transmission method and apparatus according to an embodiment of the present invention;

FIG. 2 is a schematic diagram of a downlink physical channel processing process used in an existing LTE system;

FIG. 3 is a schematic flowchart of a data sending method according to an embodiment of the present invention;

FIG. 4 is a schematic flowchart of a data receiving method according to another embodiment of the present invention;

Fig. 5 is a schematic diagram of precoding different REs on one RB;

FIG. 6 is a schematic block diagram of a data sending apparatus according to an embodiment of the present invention;

FIG. 7 is a schematic block diagram of a data receiving apparatus according to an embodiment of the present invention;

FIG. 8 is a schematic block diagram of a data sending device according to an embodiment of the present invention; and

FIG. 9 is a schematic block diagram of a data receiving device according to an embodiment of the present invention.

## DESCRIPTION OF EMBODIMENTS

The following describes technical solutions of this application with reference to accompanying drawings.

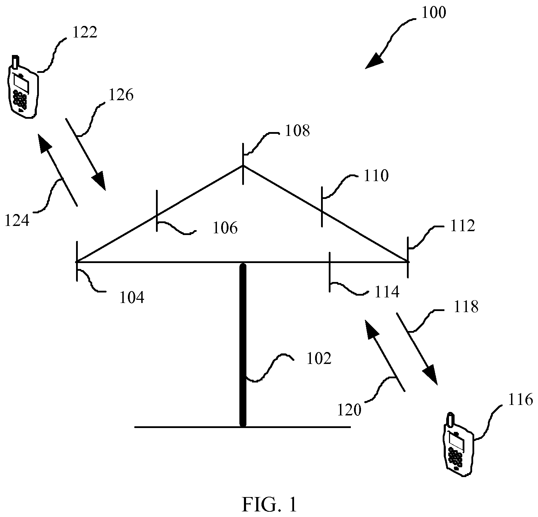

For ease of understanding embodiments of the present invention, a communications system in the embodiments of the present invention is described first in detail with reference to FIG. 1. FIG. 1 is a schematic diagram of a communications system applicable to a data transmission method and apparatus according to an embodiment of the present invention. As shown in FIG. 1, the communications system 100 includes a network device 102, and the network device 102 may include a plurality of antennas, for example, antennas 104, 106,

2

108, 110, 112, and 114. In addition, the network device 102 may additionally include a transmitter chain and a receiver chain. A person of ordinary skill in the art may understand that both the transmitter chain and the receiver chain may include a plurality of components (such as a processor, a modulator, a multiplexer, a demodulator, a demultiplexer, and an antenna) related to signal sending and receiving.

It should be understood that, the network device 102 may be a base transceiver station (Base Transceiver Station, BTS) in global system for mobile communications (global system of mobile communication, GSM) or code division multiple access (Code Division Multiple Access, CDMA); or may be a NodeB (NodeB, NB) in wideband code division multiple access (Wideband Code Division Multiple Access, WCDMA); or may be an evolved NodeB (Evolutional Node B, eNB or eNodeB) in long term evolution (Long Term Evolution, LTE); or a relay station, an access point or a remote radio unit (Remote Radio Unit, RRU); or an in-vehicle device, a wearable device, and a network side device in a future fifth-generation communications (fifth-generation, 5G) network, for example, a Transmission Reception Point (Transmission Reception Point, TRP), a base station, and a base station device. This is not particularly limited in the embodiments of the present invention.

The network device 102 may communicate with a plurality of terminal devices (for example, a terminal device 116 and a terminal device 122). The network device 102 may communicate with any quantity of terminal devices similar to the terminal device 116 or 122.

It should be understood that the terminal device 116 or 122 may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, a user apparatus. The terminal device may be a station (station, ST) in a wireless local area network (Wireless Local Area Networks, WLAN), and may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, or another processing device connected to a wireless modem, an in-vehicle device, a wearable device, and a next-generation communications system, for example, a terminal device in a fifth-generation (fifth-generation, 5G) network or a terminal device in a future evolved public land mobile network (Public Land Mobile Network, PLMN). This is not particularly limited in the embodiments of the present invention.

As shown in FIG. 1, the terminal device 116 communicates with the antennas 112 and 114. The antennas 112 and 114 send information to the terminal device 116 by using a forward link 118, and receive information from the terminal device 116 by using a reverse link 120. In addition, the terminal device 122 communicates with the antennas 104 and 106. The antennas 104 and 106 send information to the terminal device 122 by using a forward link 124, and receive information from the terminal device 122 by using a reverse link 126.

For example, in a frequency division duplex (Frequency Division Duplex, FDD) system, the forward link 118 may use a frequency band different from a frequency band used by the reverse link 120, and the forward link 124 may use a frequency band different from a frequency band used by the reverse link 126.

For another example, in a time division duplex (Time Division Duplex, TDD) system and a full duplex (Full Duplex) system, the forward link 118 and the reverse link 120 may use a same frequency band, and the forward link 124 and the reverse link 126 may use a same frequency band.

Each antenna (or an antenna group including a plurality of antennas) and/or an area designed for communication is referred to as a sector of the network device 102. For example, an antenna group may be designed to communicate with a terminal device in the sector within coverage of the network device 102. In a process in which the network device 102 communicates with the terminal devices 116 and 122 by using the forward links 118 and 124, a transmit antenna of the network device 102 may improve signal-to-noise ratios of the forward links 118 and 124 through beamforming. In addition, compared with a manner in which the network device sends, by using a single antenna, a signal to all terminal devices served by the network device, when the network device 102 sends, through beamforming, a signal to the terminal devices 116 and 122 that are randomly distributed within related coverage, less interference is caused to a mobile device in a neighboring cell.

The network device 102 and the terminal device 116 or the terminal device 122 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store in a memory) a particular quantity of data bits to be sent, by using a channel, to the wireless communications receiving apparatus. The data bits may be included in a transport block (or a plurality of transport blocks) of the data, and the transport block may be segmented to generate a plurality of code blocks.

In addition, the communications system 100 may be a public land mobile network (PLMN) network, a device-to-device (device to device, D2D) network, a machine-to-machine (machine to machine, M2M) network, or another network. FIG. 1 is only a simplified schematic diagram of an example for ease of understanding, and the network may further include another network device, which is not shown in FIG. 1.

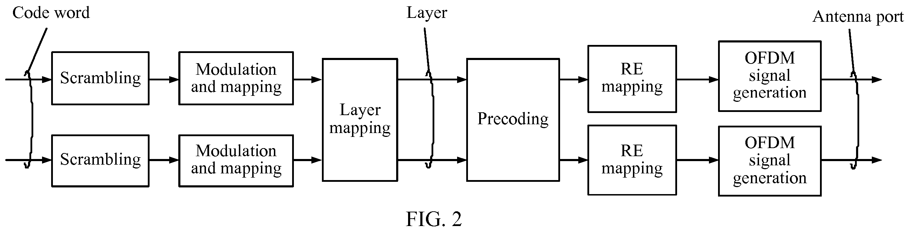

FIG. 2 is a schematic diagram of a downlink physical channel processing process used in an existing LTE system. A processing target in the downlink physical channel processing process is a code word, and the code word is usually a bitstream on which coding (including at least channel coding) is performed. The code word (code word) is scrambled (scrambling), to generate a scrambled bitstream. Modulation mapping (modulation mapping) is performed on the scrambled bitstream, to obtain a modulated symbol flow. The modulated symbol flow is mapped to a plurality of symbol layers (or referred to as spatial flows, or spatial layers) through layer mapping (layer mapping). The symbol layers are precoded (precoding), to obtain a plurality of precoded symbol flows. The precoded symbol flows are mapped by a resource unit (resource element, RE) to a plurality of REs. These REs are then modulated through orthogonal frequency division multiplexing (orthogonal frequency division multiplexing, OFDM), to generate an OFDM symbol flow. The OFDM symbol flow is then transmitted through an antenna port (antenna port).

Spatial division multiplexing (spatial division multiplexing) or transmit diversity (transmit diversity) may be implemented through the foregoing data processing process.

Spatial multiplexing means that a frequency band is repeatedly used in different space. Through spatial multiplexing, for example, an adaptive array antenna can implement space division, different beams are formed in different user directions, and each beam may provide a unique channel not interfered by another user. A plurality of terminals may perform transmission by using a same time frequency resource, so that spectrum utilization and system data throughput can be dramatically improved.

Precoding is an important technology for implementing spatial multiplexing. The precoding technology may be preprocessing a transmit end signal on a transmit end, when a channel status is known, that is, processing a to-be-transmitted signal by using a precoding matrix matching a channel resource, so that the precoded to-be-transmitted signal matches the channel, thereby reducing complexity of eliminating inter-channel impact by a receive end. Therefore, receive signal quality (for example, a signal-to-noise ratio (Signal to Interference plus Noise Ratio, SINR)) is improved since a transmitted signal is precoded. Therefore, with the precoding technology, transmission may be performed on a same time frequency resource by a transmit end device and a plurality of receive end devices, that is, MU-MIMO is implemented.

It should be particularly noted that, in the embodiments of the present invention, for ease of description, unless otherwise particularly stated, precoding is precoding used for implementing spatial multiplexing. However, a person skilled in the art should understand that, precoding mentioned in this specification may be more generally described as spatial multiplexing precoding, unless otherwise particularly stated, or if precoding does not conflict with an actual function or an internal logic in a related description thereof.

Transmit diversity means that redundancy transmission is performed on an original signal (for example, a symbol) in time, frequency, or space (for example, an antenna), or any combination of the foregoing three dimensions, to improve transmission reliability and obtain a diversity gain.

Currently, commonly used transmit diversity includes diversity modes, for example, but not limited to, space time transmit diversity (space-time transmit diversity, STTD), space-frequency transmit diversity (space-frequency transmit diversity, SFTD), time switched transmit diversity (time switched transmit diversity, TSTD), frequency switch transmit diversity (frequency switch transmit diversity, FSTD), orthogonal transmit diversity (orthogonal transmit diversity, OTD), cyclic delay diversity (cyclic delay diversity, CDD), and layer shifting (layer shifting); diversity modes derived from, evolved from, and combined by the foregoing diversity modes; and spatial multiplexing based on the transmit diversity.

In a current protocol, the MU-MIMO only supports a transmit end device and a plurality of receive end devices in transmitting data by using a same time frequency resource and a same transmission scheme (or referred to as a transmission mode, or transmission scheme). It should be noted that, the transmission scheme described herein may be a transmission scheme defined in an existing protocol (for example, an LTE protocol), or may be a transmission scheme defined in a future 5G-related protocol. This is not particularly limited in the present invention. It should be understood that, the transmission scheme may be understood as a name of a technical solution used for transmitting data, and should not constitute any limitation on the present invention. The present invention does not exclude a possibility that the transmission scheme is replaced with another name in a future protocol.

For example, a network device simultaneously transmits data to a plurality of terminal devices through closed loop spatial multiplexing (close loop spatial multiplexing, CLSM). However, due to impact by factors such as different environments in which a receive end terminal is located, different geographical locations, and different mobility, channel environments are different. For a receive end device with relatively desirable channel quality and relatively high mobility, if a transmission scheme of CLSM is used, quality of a received signal may be better. For a receive end device with relatively poor channel quality, quality of a received signal is relatively poor, and a transmit diversity mode may be used to obtain a diversity gain.

Therefore, as the MU-MIMO technology develops, it becomes a possible development trend that a transmit end device transmits data to a plurality of receive end devices by using different transmission schemes.

This application provides a data sending method and a data receiving method, so that the network device can send data to at least two terminal devices on a same time frequency resource, that is, perform downlink transmission; or at least two terminal devices can send data to a same network device on a same time frequency resource, that is, perform uplink transmission. The data sending method and the data receiving method in the embodiments of the present invention are described below by using downlink transmission and uplink transmission as examples with reference to the accompanying drawings.

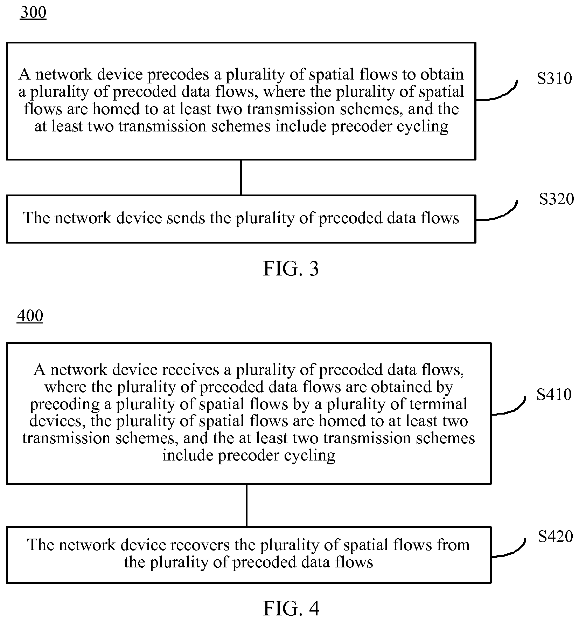

FIG. 3 is a schematic flowchart of a data sending method 300 according to an embodiment of the present invention. Specifically, FIG. 3 is a schematic flowchart of sending data to at least two terminal devices by a network device.

As shown in FIG. 3, the method 300 includes the following steps.

S310. A network device precodes a plurality of spatial flows to obtain a plurality of precoded data flows, where the plurality of spatial flows are homed to at least two transmission schemes, and the at least two transmission schemes include precoder cycling.

The network device may send a spatial flow to a plurality of different terminal devices by using a plurality of transmission schemes. Specifically, the network device may send at least one spatial flow (denoted as a first spatial flow for ease of distinguishing and description, and it may be understood that, the first spatial flow may be one or more layers) to a terminal device (denoted as a first terminal device for ease of distinguishing and description), where a transmission scheme of the at least one spatial flow may be precoder cycling; the network device may send at least one spatial flow (denoted as a second spatial flow for ease of distinguishing and description, and it may be understood that, the second spatial flow may be one or more layers) to another terminal device (denoted as a second terminal device for ease of distinguishing and description), where a transmission scheme of the at least one spatial flow may be spatial multiplexing; and the network device may further send at least two spatial flows (denoted as a third spatial flow for ease of distinguishing and description, and it may be understood that, the third spatial flow may be two or more layers) to still another terminal device (denoted as a third terminal device for ease of distinguishing and description), where transmission schemes of the at least two spatial flows may be transmit diversity. It should be noted that, for ease of understanding, referring to an LTE standard, a data flow on which layer mapping is performed is referred to as a spatial flow in this specification. However, a person skilled in the art should understand that, various spatial flows described in this specification may alternatively be referred to, in a broad sense, as modulated symbol flows obtained through modulation.

The following describes in detail processes in which the network device processes data by using different transmission schemes.

Transmission scheme 1: spatial multiplexing

If the terminal device (for example, the third terminal device) has desirable channel quality currently, the network device may determine that a transmission scheme used for the third spatial flow sent by the third terminal device may be spatial multiplexing. The network device precodes the third spatial flow to obtain a third precoded data flow.

Specifically, in MU-MIMO transmission, a precoding vector corresponding to the third spatial flow may be designed to be orthogonal to a channel of another receiving device other than a target receiving device (that is, the third terminal device) of the third spatial flow, to eliminate interference. A precoded data flow obtained through precoding is also referred to as a precoded symbol flow. For example, the precoding vector may be designed to be orthogonal to a row vector of a channel matrix of the channel of the another receiving device. For precoding described in this application, refer to various precoding schemes in the prior art, for example, a codebook-based precoding scheme and a non-codebook-based precoding scheme.

A precoding-based transmission process may be briefly represented by the following formula:

$$r = HWs + n$$

r represents a vector of a signal received by the third terminal device, H represents a channel matrix, W represents a precoding matrix, s represents a vector of a third spatial flow (or referred to as a symbol layer, a symbol flow, or a space layer) sent by the network device, n represents receiver noise.

It may be easily learned that, the receiver noise n causes impact on signal receiving, but this is not a core of this application. For ease of description, in this embodiment of the present invention, it is assumed that the receiver noise is zero, a signal is to be correctly transmitted. In fact, in the prior art, there are many solutions for eliminating the noise. For brevity, description of a same situation or a similar situation is omitted below.

In the foregoing formula, $HW$ is referred to as an equivalent channel matrix $H_{eff}$, which corresponds to a precoded channel. Demodulation reference signals (demodulation reference signal, DMRS), and spatial flows sent by the network device are precoded by using a same precoding matrix $W$, and therefore, based on the DMRSs, the equivalent channel matrix $H_{eff}$ can be estimated. The DMRSs are mapped to the spatial flows one by one, and therefore, a quantity of the DMRSs is usually equal to a quantity of the spatial flows.

By way of example, and not limitation, the spatial multiplexing includes: closed loop spatial multiplexing (close loop spatial multiplexing, CLSM).

Transmission scheme 2: transmit diversity

If the terminal device (for example, the second terminal device) has poor channel quality currently, the network device needs to obtain a diversity gain through transmit diversity, and then the network device may send data to the second terminal device by using the transmission scheme of diversity transmit. It should be noted that, in this embodiment of the present invention, the transmit diversity means a transmission scheme in which transmit diversity preprocessing is performed on an original spatial flow to obtain at least two spatial flows, and then the at least two spatial flows are sent after being precoded. For brevity, descriptions of same or similar cases are omitted below.

Specifically, the network device may add the transmit diversity preprocessing between layer mapping and precoding, to implement transmit diversity of the spatial flows sent to the second terminal device. For ease of distinguishing and description, compared with a spatial flow obtained after transmit diversity processing, a spatial flow before the transmit diversity processing is referred to as an original spatial flow. In this embodiment of the present invention, the transmit diversity processing may include but is not limited to, for example, above-listed diversity modes such as STTD, SFTD, TSTD, and FSTD. As described above, for ease of understanding, referring to an LTE standard, a data flow on which layer mapping is performed is referred to as a spatial flow in this specification. However, a person skilled in the art should understand that, various spatial flows described in this specification may alternatively be referred to, in a broad sense, as modulated symbol flows obtained through modulation. For the transmit diversity technology, transmit diversity means generating at least two data flows based on one data flow, so that the data flow may be referred to as an original spatial flow, and the generated at least two data flows may be referred to as spatial flows. It should be understood that, the original spatial flow described herein may be a modulated symbol flow before or after LTE intermediate layer mapping, or may be a modulated symbol flow in any form, for example, a modulated symbol flow obtained after modulation.

If the transmit diversity processing performed on an original spatial flow is also considered as a type of precoding, the method in this embodiment is equivalent to performing two-level precoding, which may be represented as Y=F1(F2(S)), on the original spatial flow after layer mapping. F2 represents precoding (that is, preprocessing of transmit diversity) corresponding to transmit diversity, and the precoding is used to implement transmit diversity; F1 represents beamforming (beamforming) precoding (that is, precoding in a conventional sense, which may be referred to precoding defined in the LTE standard), and the beamforming precoding is used to implement spatial multiplexing; and S represents an original spatial flow. If different transmit diversity processing modes are used, quantities of ports for sending precoded data flows finally are different. For example, when a transmit diversity processing mode is SFTD, the quantity of ports may be 2; and when a transmit diversity processing mode is FSTD, the quantity of ports may be 4.

After the network device performs transmit diversity preprocessing on the original spatial flow to obtain the at least two spatial flows (that is, the second spatial flow), the second spatial flow is precoded to obtain a second precoded data flow.

Transmission scheme 3: precoder cycling

if the terminal device (for example, the first terminal device) has poor channel quality currently, the terminal device may obtain a diversity gain through precoder cycling.

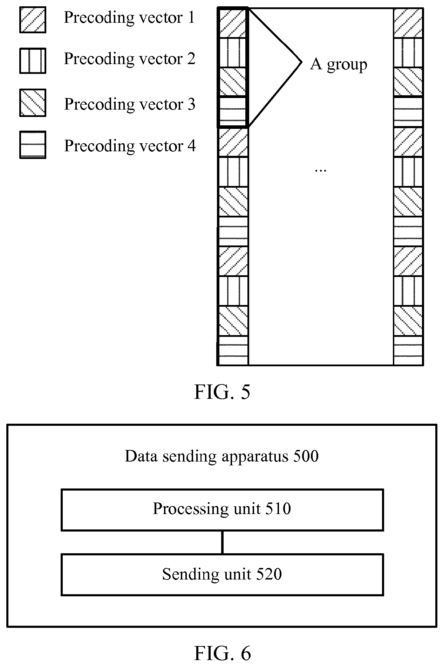

Specifically, the network device may precode the third spatial flow based on an RE. FIG. 5 is a schematic diagram of precoding different REs on one RB. It can be learned that, in an OFDM symbol, REs corresponding to a plurality of (for example, four) consecutive subcarriers are used as one group, every two of precoding vectors of the REs in each group are different, but precoding vectors of REs corresponding to a group may be the same as another group. The plurality of (for example, four, shown in FIG. 4) different precoding vectors are cyclically used in a plurality of groups of one RB, and used to precode each RE.

In other words, when the transmission scheme of precoder cycling is used, a precoding granularity is an RE, namely, RE-level (RE-level), which is different from other transmission schemes. For example, a precoding granularity of spatial multiplexing and SFBC is an RB, namely, RB-level (RB-level).

It should be understood that, the foregoing only shows an example and describes precoder cycling by using four REs as a group. However, this should not constitute any limitation on this embodiment of the present invention. In precoder cycling, more or less REs may be used as a group. Moreover, the plurality of REs in each group may be different in time domain. For example, precoder cycling is performed by using two REs corresponding to an OFDM symbol #0 and an OFDM symbol #1 on a same subcarrier as a group. Alternatively, the plurality of REs in each group may be different in frequency domain. For example, precoder cycling is performed by using four REs corresponding to a subcarrier #0 to a subcarrier #4 in a same OFDM symbol as a group. Alternatively, the plurality of REs in each group may be different in both time domain and frequency domain. For example, precoder cycling is performed by using four REs, namely, an RE corresponding to an OFDM symbol #0 and a subcarrier #0, an RE corresponding to the OFDM symbol #0 and a subcarrier #1, an RE corresponding to an OFDM symbol #1 and the subcarrier #1, and an RE corresponding to the OFDM #1 and the subcarrier #1, as a group. For brevity, examples are not enumerated herein one by one.

Through the precoder cycling described above, a same symbol may be mapped to a plurality of different REs, and the plurality of different REs are sent after being precoded by using different precoding vectors. This is equivalent to performing space diversity on a same modulated symbol. Therefore, the precoder cycling is a highly reliable transmission scheme. However, the precoder cycling is different from the transmit diversity described in the transmission scheme 2. Specifically, in the precoder cycling, transmit diversity preprocessing does not need to be performed on an original spatial flow, and a diversity gain is obtained during precoding. Therefore, compared with the transmit diversity described in the transmission scheme 2, precoder cycling can reduce the process of transmit diversity preprocessing (that is, generating at least two spatial flows by using one spatial flow), so that complexity of processing a spatial flow is reduced, and a diversity gain can be obtained.

After processing to-be-transmitted spatial flows by using the transmission schemes listed above, the network device obtains the plurality of precoded data flows corresponding to the plurality of spatial flows.

It should be understood that, the foregoing describes several possible transmission schemes in detail for ease of understanding, but this should not constitute any limitation on this embodiment of the present invention. For example, the network device may process data by using only the transmission schemes of spatial multiplexing and precoder cycling; may process data by using only the transmission schemes of precoder cycling and transmit diversity; or may process data by using the transmission scheme of precoder cycling and another existing transmission scheme, or even a transmission scheme that may be used in future.

The network device obtains the plurality of precoded data flows after precoding the plurality of spatial flows (for example, including the plurality of spatial flows homed to the transmission scheme 1, the transmission scheme 2, and the transmission scheme 3 in the foregoing description).

S320. The network device sends the plurality of precoded data flows.

Correspondingly, the terminal devices receive the plurality of precoded data flows.

Specifically, in an ideal state, a precoding vector corresponding to each spatial flow may be designed to be orthogonal to a channel of another receiving device (for example, the terminal device) other than a target receiving device of the spatial flow. Therefore, when the plurality of precoded data flows reach each receive end device, in addition to a precoded data flow that points to the receive end device and that is in the plurality of precoded data flows, other precoded data flows become zero after being transmitted on a channel from a transmit end device to the receive end device. However, it is difficult to reach the foregoing ideal state, so that the other precoded data flows cannot become zero but are greatly reduced when reaching the receive end device, causing small interference to the receive end device.

Optionally, the method 300 further includes:

S330. The network device sends downlink control information (downlink control information, DCI), where the DCI may carry indication information of a transmission scheme.

Specifically, the transmission scheme may be indicated in a DCI format, or may be indicated by using the corresponding indication information carried in the DCI.

Therefore, each terminal device determines, based on received DCI, a transmission scheme to which a precoded data flow sent to the terminal device is homed, and demodulates the received precoded data flow based on the transmission scheme and a received precoded demodulation reference signal, to restore a data flow sent to the terminal device.

With reference to the foregoing three possible transmission schemes, the following describes in detail processes of processing, by the terminal devices, received precoded data flows.

Transmission scheme 1. Spatial multiplexing

It can be learned from the foregoing description that, a transmission scheme by using which the third terminal device receives the third precoded data flow sent by the network device is spatial multiplexing. The third terminal device may demodulate the third precoded data flow based on a received precoded demodulation reference signal corresponding to the third spatial flow.

Specifically, a signal $r$ received by the third terminal device may be represented as:

$$r = HW_i s_i + \sum_{j \neq i} HW_j s_j$$

$W_i$ represents a precoding matrix of a data flow sent to the third terminal device, $W_j$ represents a precoding vector of a data flow sent to other terminal devices (for example, the first terminal device and the second terminal device). In the foregoing case, it is assumed that the receiver noise is zero.

The third terminal device may process the received signal by using various receiving algorithms, to reduce interference to zero. Specifically, the third terminal device may design each column vector of the precoding matrix $W_i$ of the third spatial flow to be orthogonal to each row vector of $H_j$, so that $\sum_{j \neq i} HW_j s_j$ is zero, that is, interference is zero. In this way, an equivalent channel matrix may be estimated based on a received DMRS corresponding to a third data flow, and a data flow sent by the network device to the third terminal device may be obtained through demodulation based on the estimated equivalent channel matrix.

It may be understood that, in the transmission scheme of spatial multiplexing, the network device may map the precoded demodulation reference signal and the precoded data flow to a same RB and send the RB to the third terminal device. Therefore, the equivalent channel matrix may be accurately estimated based on the precoded demodulation reference signal, to help the third terminal device demodulate the received precoded data flow.

Therefore, the third terminal device can restore the third data flow from the received signal through the precoding processing. In other words, the network device implements spatial multiplexing through precoding.

Transmission scheme 2. Transmit diversity:

It can be learned from the foregoing description that, a transmission scheme by using which the second terminal device receives a precoded data flow sent by the network device is transmit diversity. The second terminal device may demodulate a second precoded data flow based on a received precoded demodulation reference signal corresponding to the second spatial flow.

The second spatial flow includes at least two spatial flows obtained by performing transmit diversity on an original spatial flow, and the at least two spatial flows are associated with each other. Therefore, the second precoded data flow cannot be demodulated by separating precoded data flows corresponding to the at least two spatial layers.

The second terminal device can estimate an equivalent channel matrix of the second precoded data flow based on a received second precoded demodulation reference signal, to obtain a second data flow through demodulation. It should be noted that, the second terminal device obtains at least two spatial flows through demodulating the second precoded data flow. After obtaining the at least two spatial flows through demodulation, the second terminal device may combine the at least two spatial flows into one spatial flow (that is, the original spatial flow), to obtain data bits.

Transmission scheme 3. Precoder cycling:

It can be learned from the foregoing description that, a transmission scheme by using which the first terminal device receives a first precoded data flow sent by the network device is precoder cycling. The first terminal device may demodulate the first precoded data flow based on a received precoded demodulation reference signal corresponding to the first spatial flow.

When data carried in each RE is demodulated, because precoding vectors used by each RE in a group are different, corresponding demodulation reference signals are also different. Therefore, demodulation on the third precoded data flow is also based on the RE, and demodulation needs to be performed based on a precoding vector of a demodulation reference signal corresponding to each RE.

A specific method in which the first terminal device demodulates, based on a precoding vector of a demodulation reference signal corresponding to each RE, data carried on the corresponding RE is similar to the specific method in which the third terminal device demodulates, based on a precoding vector of a demodulation reference signal corresponding to each RB, data carried on the RB. Both the methods can be implemented by using the prior art. For brevity, details are not described herein again.

In this way, the terminal devices can restore the spatial flow from the received precoded data flow.

It should be understood that, specific implementation processes of the transmission schemes of space multiplexing, transmit diversity, and precoder cycling listed above may be the same as the prior art. For brevity, details are not described herein again.

It should be further understood that, the foregoing describes this embodiment of the present invention in detail only by using an example in which the network device sends data to the first terminal device, the second terminal device, and the third terminal device. However, this should not constitute any limitation on this embodiment of the present invention. In a same cell, the network device may send a precoded data flow to more or less terminal devices. Transmission schemes by using which the precoded data flow is sent to the terminal devices may include but are not limited to the schemes listed above, and moreover, different data flows may use a same transmission scheme or different transmission schemes. This is not particularly limited in this application.

Therefore, according to the data sending method in this embodiment of the present invention, the plurality of spatial flows homed to the at least two transmission schemes are precoded and sent to different terminal devices, so that a spatial degree of freedom is improved, and based on different channel quality, an appropriate transmission scheme can be flexibly used. Moreover, the transmission scheme of precoder cycling is used, and reliability of data transmission can be improved.

The data sending method 300 in the embodiments of the present invention is described in detail above with reference to FIG. 3 to FIG. 4. The data receiving method 400 in the embodiments of the present invention is described below with reference to FIG. 4.

FIG. 4 is a schematic flowchart of the data receiving method 400 according to another embodiment of the present invention. Specifically, FIG. 4 is a schematic flowchart of receiving, by a network device, data sent by at least two terminal devices.

As shown in FIG. 4, the method 400 includes the following steps.

S410. A network device receives a plurality of precoded data flows, where the plurality of precoded data flows are obtained by precoding a plurality of spatial flows by transmit end devices, the plurality of spatial flows are homed to at least two transmission schemes, and the at least two transmission schemes include precoder cycling.

Specifically, when a plurality of terminal devices located in a same cell send uplink data to the network device by using a same time frequency resource, the plurality of terminal devices may use different transmission schemes, as scheduled by the network device. The network device determines a transmission schemes for each terminal device based on current channel quality of the terminal device, and notifies the terminal device based on downlink control information (DCI) on a physical downlink control channel (physical downlink control channel).

For example, a first terminal device may send a first precoded data flow to the network device, where the first precoded data flow is obtained by precoding a first spatial flow, and the first spatial flow may be homed to a transmission scheme of spatial multiplexing; a second terminal device may send a second precoded data flow to the network device, where the second precoded data flow is obtained by precoding a second spatial flow, and the second spatial flow may be homed to a transmission scheme of transmit diversity; a third terminal device sends a third precoded data flow to the network device, where the third precoded data flow is obtained by precoding the third spatial flow, and the third spatial flow may be homed to a transmission scheme of precoder cycling.

It should be noted that, the first spatial flow described herein may correspond to one or more layers, the third spatial flow may correspond to one or more layers, and the second spatial flow may be obtained by performing transmit diversity preprocessing on an original spatial flow and may correspond to two or more layers. It should be noted that, in the description of this specification, a layer may be understood as a spatial flow obtained by performing layer mapping on a modulated symbol flow, or may be understood as a modulated symbol flow in a broad sense.

Specific implementation processes of the transmission schemes have been described in detail in S310 in the method 300. For brevity, details are not described herein again.

S420. The network device restores the plurality of spatial flows from the plurality of precoded data flows.

Specifically, the network device may receive signals from the first terminal device, the second terminal device, and the third terminal device, and to restore the first spatial flow, the second spatial flow, and the third spatial flow from the received signals, the network device may eliminate interference by using a receiving algorithm.

It should be understood that, a method for processing the received signals by the network device may be similar to a method for processing the received signals by the various terminal devices in the method 300. For brevity, details are not described herein again.

Therefore, according to the data receiving method in this embodiment of the present invention, the plurality of spatial flows homed to the at least two transmission schemes are precoded by different terminal devices and sent to the network device, so that a spatial degree of freedom is improved, and based on different channel quality, an appropriate transmission scheme can be flexibly used. Moreover, the transmission scheme of precoder cycling is used, and reliability of data transmission can be improved.

The data sending method and the data receiving method in the embodiments of the present invention are described in detail above with reference to FIG. 3 to FIG. 5. A data sending apparatus and a data receiving apparatus in the embodiments of the present invention are described in detail below with reference to FIG. 6 to FIG. 9.

FIG. 6 is a schematic block diagram of a data sending apparatus 500 according to an embodiment of the present invention. As shown in FIG. 6, the data sending apparatus 500 includes a processing module 510 and a sending module 520.

Specifically, the data sending apparatus 500 may correspond to the network device in the data sending method 300 according to the embodiments of the present invention, and the data sending apparatus 500 may include modules configured to perform the method performed by the network device in the data sending method 300 in FIG. 3. Moreover, the modules in the data sending apparatus 500 and the foregoing operations and/or functions are for the purpose of implementing the corresponding procedure of the data sending method 300 in FIG. 3. For brevity, details are not described herein again.

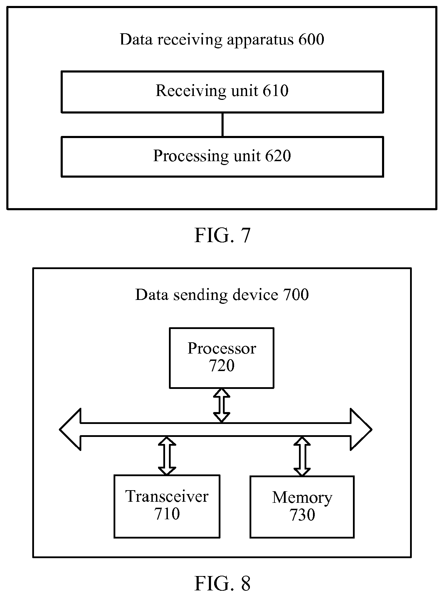

In a possible implementation, the processing unit 510 in the data sending apparatus 500 may correspond to (for example, the processing unit 510 is or is configured as) a processor 720 in a data sending device 700 shown in FIG. 8; and the sending unit 520 in the data sending apparatus 500 may correspond to (for example, the sending unit 520 is or is configured as) a transceiver 710 in the data sending device 700 shown in FIG. 8.

FIG. 7 is a schematic block diagram of a data receiving apparatus 600 according to an embodiment of the present invention. As shown in FIG. 7, the data receiving apparatus 600 includes a receiving module 610 and a processing module 620.

Specifically, the data receiving apparatus 600 may correspond to the network device in the data receiving method 400 in the embodiments of the present invention, and the data receiving apparatus 600 may include modules configured to perform the method performed by the network device in the data receiving method 400 in FIG. 4. Moreover, the modules in the data receiving apparatus 600 and the foregoing operations and/or functions are for the purpose of implementing the corresponding procedure of the data receiving method 400 in FIG. 4. For brevity, details are not described herein again.

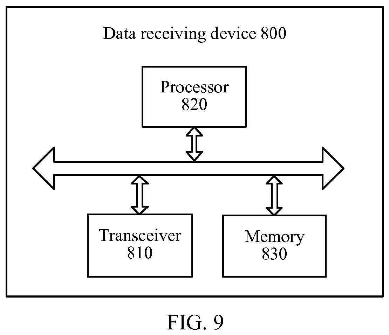

In a possible implementation, the receiving unit 610 in the data receiving apparatus 600 may correspond to (for example, the receiving unit 610 is or is configured as) a transceiver 810 in a data receiving device 800 shown in FIG. 9, and the processing unit 620 in the data receiving apparatus 600 may correspond to (for example, the processing unit 620 is or is configured as) a processor 820 in the data receiving device 800 shown in FIG. 9.

FIG. 8 is a schematic block diagram of a data sending device 700 according to an embodiment of the present invention. As shown in FIG. 8, the data sending device 700 includes: a transceiver 710, a processor 720, and a memory 730. The transceiver 710, the processor 720, and the memory 730 communicate with each other by using an internally connected channel, to transfer a control and/or data signal. The memory 730 is configured to store a computer program, and the processor 720 is configured to invoke the computer program from the memory 730 and run the computer program, to control the transceiver 710 to transmit and receive a signal. The memory 730 may be configured in the processor 720, or may be independent of the processor 720.

Specifically, the data sending device 700 may correspond to the network device in the data sending method 300 according to the embodiments of the present invention, and the data sending device 700 may include units configured to perform the method performed by the network device in the data sending method 300 in FIG. 3. Moreover, the units in the data sending device 700 and the foregoing operations and/or functions are for the purpose of implementing the corresponding procedure of the data sending method 300 in FIG. 3. For brevity, details are not described herein again.

FIG. 9 is a schematic block diagram of a data receiving device 800 according to an embodiment of the present invention. As shown in FIG. 9, the data receiving device 800 includes: a transceiver 810, a processor 820, and a memory 830. The transceiver 810, the processor 820, and the memory 830 communicate with each other by using an internally connected channel, to transfer a control and/or data signal. The memory 830 is configured to store a computer program, and the processor 820 is configured to invoke the computer program from the memory 830 and run the computer program, to control the transceiver 810 to transmit and receive a signal. The memory 830 may be configured in the processor 820, or may be independent of the processor 820.

Specifically, the data receiving device 800 may correspond to the network device in the data receiving method 400 according to the embodiments of the present invention, and the data receiving device 800 may include units configured to perform the method performed by the network device in the data receiving method 400 in FIG. 4. Moreover, the units in the data receiving device 800 and the foregoing operations and/or functions are for the purpose of implementing the corresponding procedure of the data receiving method 400 in FIG. 4. For brevity, details are not described herein again.

It should be understood that, the processor in the embodiments of this application may be a central processing unit (central processing unit, CPU), or may further be another general purpose processor, a digital signal processor (digital signal processor, DSP), an application-specific integrated circuit (application specific integrated circuit, ASIC), a field programmable gate array (field programmable gate array, FPGA), or another programmable logical device, discrete gate or transistor logical device, discrete hardware component, or the like.

It may be understood that the memory in the embodiments of the present invention may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or some of the foregoing embodiments may be implemented by means of software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on the computer, the procedure or functions according to the embodiments of the present invention are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. **A wearable** device or an in-vehicle device comprising:

   • a processing module (620) configured to:

     ◦ determine, based on a channel quality of a first channel between the wearable device or the in-vehicle device and a first terminal device, a first transmission scheme to be used by the first terminal device for sending a precoded first spatial flow to the wearable device or the in-vehicle device;
     ◦ determine, based on a channel quality of a second channel between the wearable device or the in-vehicle device and a second terminal device, a second transmission scheme to be used by the second terminal device for sending a precoded second spatial flow to the wearable device or the in-vehicle device, the second terminal device being different to the first terminal device;

• wherein the wearable device or the in-vehicle device is further configured to:

◦ notify the first terminal device by using first downlink control information, DCI, of the first transmission scheme, the first transmission scheme being precoder cycling;
◦ notify the second terminal device by using second DCI of the second transmission scheme, the second transmission scheme being spatial multiplexing;

• a receiving module (610) configured to:

o receive the precoded first spatial flow from the first terminal device and the precoded second spatial flow from the second terminal device, wherein the precoded first spatial flow is obtained by the first terminal device by precoding a first spatial flow according to the first transmission scheme, and the precoded second spatial flow is obtained by the second terminal device by precoding a second spatial flow according to the second transmission scheme, wherein the received precoded first spatial flow is sent by the first terminal device on a same time-frequency resource to the wearable device or the in-vehicle device as the received precoded second spatial flow is sent by the second terminal device to the wearable device or the in-vehicle device;

• a processing module (620) configured to restore the first spatial stream from the precoded first spatial stream and to restore the second spatial stream from the precoded second spatial stream.

## Patentansprüche

1.  Tragbare Vorrichtung oder fahrzeuginterne Vorrichtung, die Folgendes umfasst:

• ein Verarbeitungsmodul (620), das konfiguriert ist zum:

◦ Bestimmen auf der Grundlage einer Kanalqualität eines ersten Kanals zwischen der tragbaren Vorrichtung oder der fahrzeuginternen Vorrichtung und einem ersten Endgerät eines ersten Übertragungsschemas, das durch das erste Endgerät zum Senden eines vorcodierten ersten räumlichen Flusses zu der tragbaren Vorrichtung oder der fahrzeuginternen Vorrichtung verwendet werden soll;
◦ Bestimmen auf der Grundlage einer Kanalqualität eines zweiten Kanals zwischen der tragbaren Vorrichtung oder der fahrzeuginternen Vorrichtung und einem zweiten Endgerät eines zweiten Übertragungsschemas, das durch das zweite Endgerät zum Senden eines vorcodierten zweiten räumlichen Flusses zu der tragbaren Vorrichtung oder der fahrzeuginternen Vorrichtung verwendet werden soll, wobei das zweite Endgerät vom ersten Endgerät verschieden ist;

• wobei die tragbare Vorrichtung oder die fahrzeuginterne Vorrichtung ferner konfiguriert ist zum:

◦ Benachrichtigen des ersten Endgeräts unter Verwendung erster Abwärtsstreckensteuerinformationen, DCI, über das erste Übertragungsschema, wobei das erste Übertragungsschema ein zyklisches Vorcodiererdurchlaufen ist;
◦ Benachrichtigen des zweiten Endgeräts unter Verwendung zweiter DCI über das zweite Übertragungsschema, wobei das zweite Übertragungsschema räumliches Multiplexieren ist;

• ein Empfangsmodul (610), das konfiguriert ist zum:

◦ Empfangen des vorcodierten ersten räumlichen Flusses vom ersten Endgerät und des vorcodierten zweiten räumlichen Flusses vom zweiten Endgerät, wobei der vorcodierte erste räumliche Fluss durch das erste Endgerät durch Vorcodieren eines ersten räumlichen Flusses gemäß dem ersten Übertragungsschema erhalten wird und der vorcodierte zweite räumliche Fluss durch das zweite Endgerät durch Vorcodieren eines zweiten räumlichen Flusses gemäß dem zweiten Übertragungsschema erhalten wird,
wobei der empfangene vorcodierte erste räumliche Fluss durch das erste Endgerät in demselben Zeit/Frequenz-Betriebsmittel zu der tragbaren Vorrichtung oder der fahrzeuginternen Vorrichtung gesendet wird, in dem der empfangene vorcodierte zweite räumliche Fluss durch das zweite Endgerät zu der tragbaren Vorrichtung oder der fahrzeuginternen Vorrichtung gesendet wird;

• ein Verarbeitungsmodul (620), das konfiguriert ist, den ersten räumlichen Strom aus dem vorcodierten ersten räumlichen Strom wiederherzustellen und den zweiten räumlichen Strom aus dem vorcodierten zweiten räumlichen Strom wiederherzustellen.

**Revendications**

1. Dispositif portable ou dispositif embarqué comprenant :

   • un module de traitement (620) configuré pour :

      ◦ déterminer, sur la base d'une qualité de canal d'un premier canal entre le dispositif portable ou le dispositif embarqué et un premier dispositif terminal, un premier schéma de transmission à utiliser par le premier dispositif terminal pour envoyer un premier flux spatial précodé au dispositif portable ou au dispositif embarqué ;
      ◦ déterminer, sur la base d'une qualité de canal d'un deuxième canal entre le dispositif portable ou le dispositif embarqué et un deuxième dispositif terminal, un deuxième schéma de transmission à utiliser par le deuxième dispositif terminal pour envoyer un deuxième flux spatial précodé au dispositif portable ou au dispositif embarqué, le deuxième dispositif terminal étant différent du premier dispositif terminal ;

   • le dispositif portable ou le dispositif embarqué étant en outre configuré pour :

      ◦ notifier le premier dispositif terminal en utilisant des premières informations de commande de liaison descendante, DCI, du premier schéma de transmission, le premier schéma de transmission étant un cycle de précodeur ;
      ◦ notifier le deuxième dispositif terminal en utilisant des deuxièmes DCI du deuxième schéma de transmission, le deuxième schéma de transmission étant un multiplexage spatial ;

   • un module de réception (610) configuré pour :

      ◦ recevoir le premier flux spatial précodé du premier dispositif terminal et le deuxième flux spatial précodé du deuxième dispositif terminal, le premier flux spatial précodé étant obtenu par le premier dispositif terminal par précodage d'un premier flux spatial en fonction du premier schéma de transmission, et le deuxième flux spatial précodé étant obtenu par le deuxième dispositif terminal par précodage d'un deuxième flux spatial en fonction du deuxième schéma de transmission,
le premier flux spatial précodé reçu étant envoyé par le premier dispositif terminal sur une même ressource temps-fréquence au dispositif portable ou au dispositif embarqué que le deuxième flux spatial précodé reçu est envoyé par le deuxième dispositif terminal au dispositif portable ou au dispositif embarqué ;

• un module de traitement (620) configuré pour restaurer le premier flux spatial à partir du premier flux spatial précodé et pour restaurer le deuxième flux spatial à partir du deuxième flux spatial précodé.

FIG. 1

FIG. 2

Code word → Scrambling → Modulation and mapping → Layer mapping → Layer → Precoding → RE mapping → OFDM signal generation → Antenna port

Scrambling → Modulation and mapping → RE mapping → OFDM signal generation

300

| A network device precodes a plurality of spatial flows to obtain a plurality of precoded data flows, where the plurality of spatial flows are homed to at least two transmission schemes, and the at least two transmission schemes include precoder cycling | S310 |

| The network device sends the plurality of precoded data flows | S320 |

FIG. 3

400

| A network device receives a plurality of precoded data flows, where the plurality of precoded data flows are obtained by precoding a plurality of spatial flows by a plurality of terminal devices, the plurality of spatial flows are homed to at least two transmission schemes, and the at least two transmission schemes include precoder cycling | S410 |

| The network device recovers the plurality of spatial flows from the plurality of precoded data flows | S420 |

FIG. 4

Precoding vector 1
Precoding vector 2
Precoding vector 3
Precoding vector 4

A group

...

FIG. 5

Data sending apparatus 500

Processing unit 510

Sending unit 520

FIG. 6

Data receiving apparatus 600

Receiving unit 610

Processing unit 620

FIG. 7

Data sending device 700

Processor
720

Transceiver
710

Memory
730

FIG. 8

FIG. 9

**EP 3 576 362 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1973238 A1

- WO 2009091307 A1